# EUROPEAN PATENT SPECIFICATION

(11) **EP 3 546 339 B1**
(45) Date of publication and mention of the grant of the patent: **30.08.2023**
(21) Application number: 19164522.5
(22) Date of filing: 22.03.2019
(51) Int. Cl.: B64C 1/10, B64D 11/00, B64D 11/06

(54) **BULKHEAD PARTITION DESIGN AND CORRESPONDING SEATING ARRANGEMENT**
TRENNWAND AUSLEGUNG UND ENTSPRECHENDE SITZANORDNUNG
CONCEPTION DE CLOISON DE SÉPARATION ET AGENCEMENT DE SIÈGES CORRESPONDANT

(30) Priority: 28.03.2018 US 201815938065
(43) Date of publication of application: 02.10.2019
(73) Proprietor: The Boeing Company, Arlington, VA 22202 (US)
(72) Inventor: Thomas, Eric E., Chicago, IL 60606-1596 (US)
(74) Representative: Witte, Weller & Partner Patentanwälte mbB

(56) References cited:
- EP-A1- 3 219 555
- WO-A1-2017/167946
- US-A1- 2009 200 422
- US-A1- 2014 014 774

## Description

### TECHNOLOGICAL FIELD

The present disclosure relates generally to bulkheads for dividing passenger seating classes, and more particularly, to a bulkhead partition design that provides an open storage compartment for an aft positioned row of seats.

### BACKGROUND

Cabins in passenger aircraft are typically divided into various sections ("class sections") for various reasons. For example, a cabin may have premium class seating at the forward end of the passenger cabin and economy class seating behind the premium class seating. Classes are typically divided at the boundary between class sections by a bulkhead extending from floor to ceiling, and in the aisle by a curtain. Premium class seating typically includes larger, more comfortable seats, a less dense seating arrangement commensurate with the level of luxury of the seats. Economy class seating typically includes smaller seats and a more dense seating arrangement. For example, economy class rows may include three seats, while an equal length row in a premium class may include only two seats.

For most partitions that are typically employed, the presence of the partition precludes the passengers in the front-most row of seats of the economy class from utilizing the space under the seats in the row in front of them -- the last row of premium class seats -- for storage of luggage or personal items, or for positioning their feet. This lack of under-seat storage places additional demand for the storage space provided in the overhead bins, which may be inadequate. As such, there is a need for alternative bulkhead partition designs, particularly ones that allow for more efficient use of space while maintaining separation between the classes of seating. EP 3 219 555 A1 states, according to its abstract, a partition wall module for a cabin of a vehicle for an optical and mechanical separation of different cabin regions comprises a lower partition wall section having at least one first fastening means for fastening the partition wall module to at least one near-floor structurally fixed component in the cabin, a surface-like rigid upper partition wall section converging with the lower partition wall section having at least one second fastening means in a region of the partition wall module facing away from the lower partition wall section for fastening the partition wall module to at least one near-ceiling structurally fixed component in the cabin. The upper partition wall section at least in a region comprises an arched curvature around a horizontal axis for adapting to the shape of a backrest of a passenger seat. The partition wall module comprises at least one edge stiffening element, which extends between a near-floor region and a near-ceiling region of the partition wall module. US 2009/0200422 A1 states, according to its abstract, a class divider for an aircraft passenger cabin is provided. The class divider includes a partition positioned immediately aft of a rear row of seats in a first predetermined class area of the aircraft cabin and an aft-facing panel having a width and height generally corresponding to a width and height of the rear row of seats. One or more passenger convenience features selected from the group of video monitors, tray tables, and magazine storage pockets are provided on the aft-facing panel for use by passengers seated immediately aft of the partition in a front row of a second predetermined class area of the aircraft cabin. US 2014/0014774 A1 states, according to its abstract, a bulkhead for dividing passenger seating classes, and a passenger seating arrangement including a bulkhead, the bulkhead configured for attachment to the back of a first row of premium class passenger seats, wherein a backside of the bulkhead is fitted with amenities that serve an aft positioned second row of economy class seats, wherein the first row of seats includes a lesser number of seats than the second row of seats.

WO 2017/167946 A1 states, according to its abstract, a separating wall device, in particular for a vehicle, comprising at least one frame unit, which, at least in an assembled state, defines at least one separating-unit holding region and which has at least one frame section. The frame section, examined along a frame center line, which extends in the frame section and along the frame section, has at least two frame cross-sections, which are substantially different from each other.

### SUMMARY

The present invention discloses a bulkhead partition for a passenger cabin of an aircraft, according to independent claim 1.

In one or more aspects, the present disclosure provides an aircraft as defined in claim 15, and/or a passenger seating arrangement for a passenger cabin of an aircraft as defined in claim 8.

The features, functions and advantages that have been discussed can be achieved independently in various aspects or may be combined in yet other aspects further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale.
Fig. 1 shows a perspective view of an exemplary aircraft that incorporates aspects of the present disclosure.
Fig. 2. shows a partial cross-sectional view of the aircraft of Fig. 1, showing a rearmost row of seats in a forward section of the passenger cabin, a bulkhead partition, and a frontmost row of seats of a rearward section of the passenger cabin.
Fig. 3 shows a perspective view of a bulkhead partition [upper is straight] according to aspects of the present disclosure.
Fig. 4 shows a side view of the bulkhead partition of Fig. 3.
Fig. 5 shows a forward facing view of the bulkhead partition of Fig. 3.
Fig. 6 shows a side view of another bulkhead partition [upper is curving backward] not forming part of the claimed invention, but which may be useful for understanding features thereof.

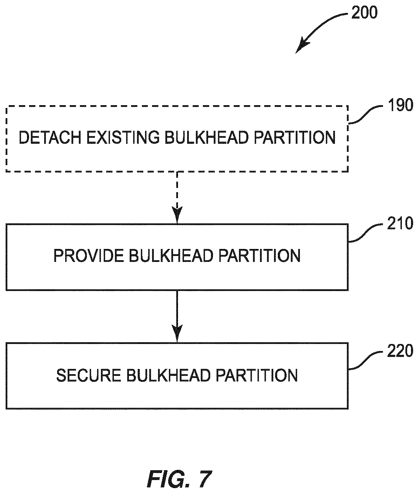

Fig. 7 shows a flowchart pertaining to aspects of the present disclosure not forming part of the claimed invention, but which may be useful for understanding features thereof.

### DETAILED DESCRIPTION

Aspects of the present disclosure are directed to a bulkhead partition, and to related passenger seating arrangements and methods. The bulkhead partition includes an upper portion and a lower portion, with the lower portion having a compartment that provides additional storage and/or foot space. The bulkhead partition is intended for use with aircraft, and finds particular utility in passenger aircraft.

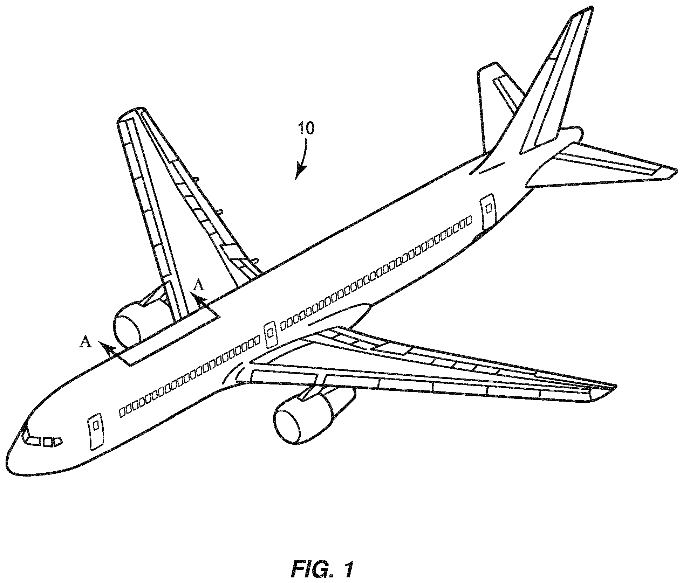

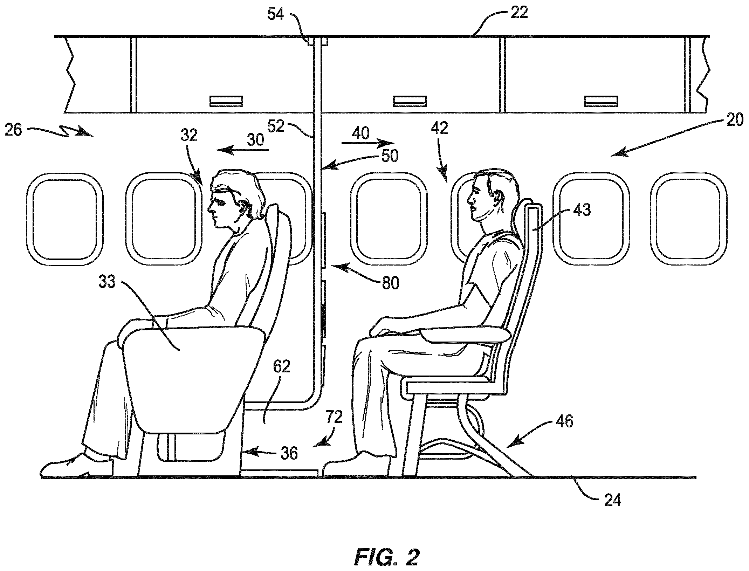

Fig. 1 shows a perspective view of an exemplary aircraft 10, and Fig. 2 shows a partial cross-sectional view along line A-A in Fig. 1. As can be seen, the aircraft 10 includes at least one passenger cabin 20 that has a ceiling 22, a floor 24, seats, and one or more bulkhead partitions 52. The locations of seats and bulkhead partition(s) 52 defines a passenger seating arrangement 26. In some aspects, the aircraft 10 includes one passenger cabin 20; in some aspects, the aircraft 10 includes two or more passenger cabins 20. The passenger cabin 20 has a passenger seating arrangement 26 that includes at least two sections, such as the forward section 30 and a rearward section 40. In some aspects, the forward section 30 and the rearward section 40 may have different levels of service and/or amenities. For example, the forward section 30 may be a premium class section and the rearward section 40 may be an economy class section. In some aspects, the forward section 30 and the rearward section 40 have the same level of service and/or amenities. A first row of seats 32 is disposed in the forward section 30 of the passenger cabin 20. The first row of seats 32 corresponds to the last row, or rearmost row, of seats in the forward section 30. In some aspects, the first row of seats 32 comprises a plurality of seats, including a first front seat 33 and a second front seat (not shown). A second row of seats 42 is disposed behind the first row of seats 32 and in the rearward section 40 of the passenger cabin 20. The second row of seats 42 corresponds to the forwardmost row of seats in the rearward section 40. In some aspects, the second row of seats 42 comprises a plurality of seats, including a first rear seat 43, a second rear seat (not shown), and a third rear seat (not shown). The first row of seats 32 and the second row of seats 42 have corresponding (load-bearing) support structures 36, 46 that connect the seats to the floor of the passenger cabin 20, and support the seats and the loads placed therein (e.g., the weight of the passenger in that seat). A bulkhead partition 50 is disposed between the first row of seats 32 and the second row of seats 42, and delineates the boundary between the forward section 30 and the rearward section 40 of the passenger cabin 20.

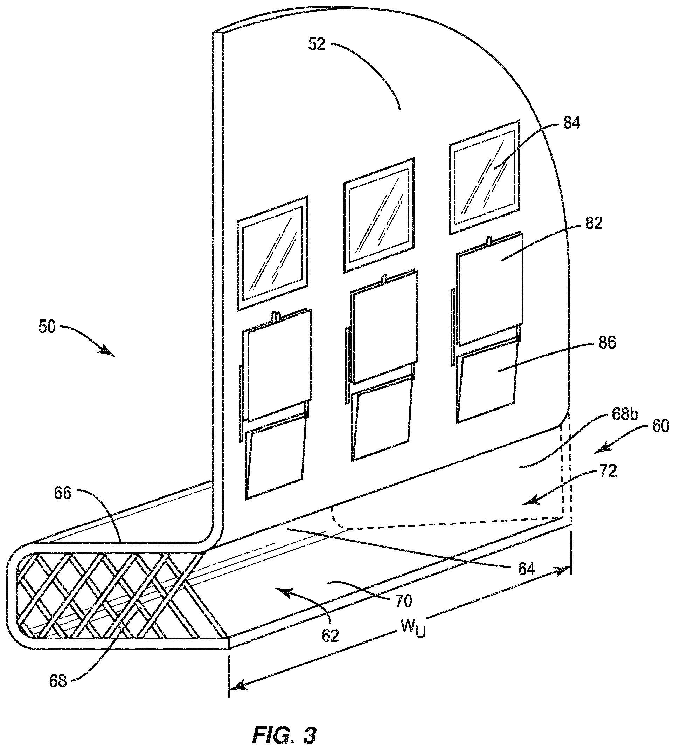

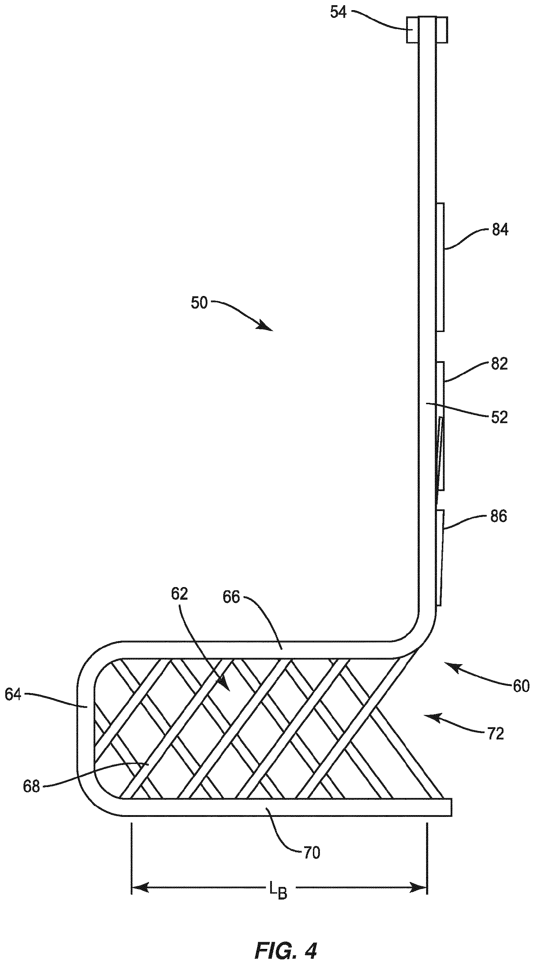

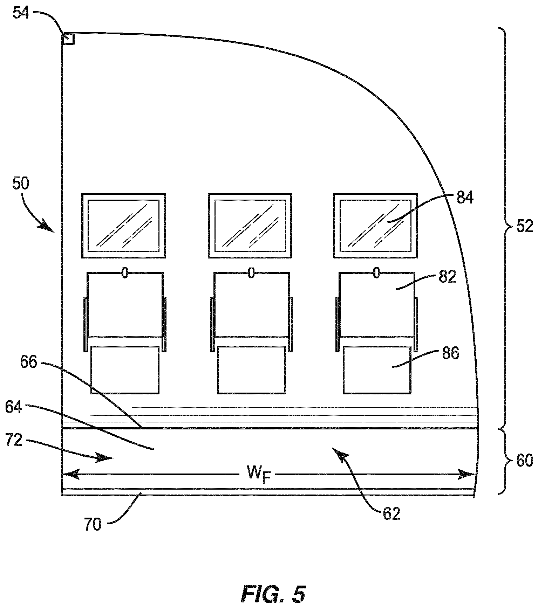

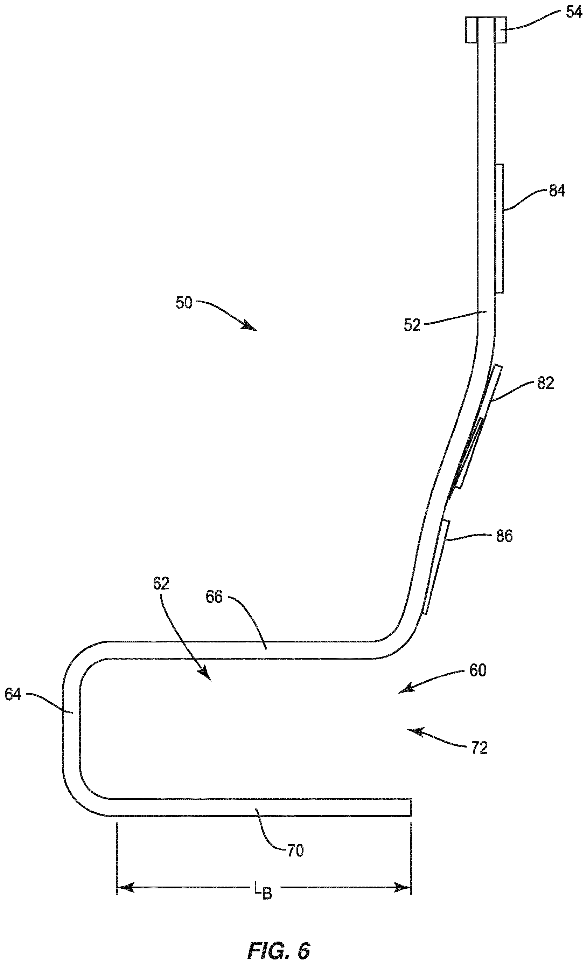

Referring to Figs. 3-6, the bulkhead partition 50 includes an upper section 52 and a lower section 60. The upper section 52 extends upwardly between the first row of seats 32 and the second row of seats 42. The upper section 52 is straight (in side view), see Figs. 3-5; in some examples not forming part of the claimed invention, but which may be useful for understanding features thereof, the upper section 52 may be rearwardly angled and/or curved (in side view), see Fig. 6, and/or otherwise recessed so as to more readily provide the first row of seats 32 space to recline. In some aspects, the upper and outboard lateral edges of the upper section 52 are curved so as to match and/or accommodate a curved cross-sectional shape of the passenger cabin 20. In some aspects, the upper and outboard lateral edges are straight or straight and curved. The inboard lateral edge of the upper section 52 is advantageously straight and/or curved so as to provide a desired visual boundary for an associated aisle. In some aspects, the upper section 52 is configured to and/or does extend above a level of an overhead storage bin; in some aspects the upper section 52 is configured and/or does not extend above a level of an overhead storage bin.

The lower section 60 is disposed below the upper section 52. The lower section 60 extends forwardly from the upper section 52. This forward extension is so that a portion of the lower section 60 extends underneath the first row of seats 32 when the bulkhead partition 50 is mounted in position. The lower section 60 forms a compartment 62, which, when installed, is disposed underneath the first row of seats 32. The lower section 60 includes a forward compartment wall 64, a first compartment lateral wall 68, an upper compartment wall 66, and a rear opening 72. The forward compartment wall 64 is disposed forward of the compartment 62 and forwardly bounds the compartment 62. The first compartment lateral wall 68 is disposed on a first lateral side of the compartment 62 and bounds the first lateral side of the compartment 62. In Figs. 3-6, the first lateral side of the compartment 62 is disposed toward the inboard side (e.g., toward a center aisle) of the passenger cabin 20. The lower section 60 according to the claimed invention does not include a second compartment lateral wall 68b that is disposed on a second lateral side of the compartment 62 and bounds the second lateral side of the compartment 62. The second lateral side is opposite the first lateral side, and for the Figs. 3-6 illustration, the second lateral side is toward the outboard side (e.g., toward the window side) of the passenger cabin 20. Second compartment lateral wall 68b is shown in Fig. 3 in dashed lines to indicate that it is an example not forming part of the claimed invention, but which may be useful for understanding features thereof. Thus, there is no second compartment lateral wall 68b. The upper compartment wall 66 is disposed above the compartment 62 and upwardly bounds the compartment 62. The upper compartment wall 66 extends from, and connects, the upper section 52 to the forward compartment wall 64. In some aspects, the upper compartment wall 66 is disposed horizontally and/or is generally planar. In some aspects, both the upper compartment wall 66 and the forward compartment wall 64 have respective widths W_{U} and W_{F} that are wider than the first front seat 33, and advantageously as wide as the combined width of the second row of seats 42. The rear opening 72 provides access to the compartment 62 from the second row of seats 42, and likewise, in some aspects, has a width Wo that is wider than the first front seat, advantageously as wide as the combined width of the second row of seats 42.

The forward compartment wall 64, and the first and second compartment lateral walls 68,68b are solid, and/or formed by mesh, and/or formed by webbing, and/or any combination thereof. Thus, in some aspects, the forward compartment wall 64 is solid, and the first compartment lateral wall 68 is webbing. In some aspects, both the forward compartment wall 64 and the first compartment lateral wall 68 are solid. In some aspects, the forward compartment wall 64 extends continuously along substantially all of a forward perimeter of the compartment 62. In some aspects, the first compartment lateral wall 68 extends continuously along substantially all of a first lateral side perimeter of the compartment 62.

In some aspects, the lower section 60 further includes a base compartment wall 70 disposed below the compartment 62. The base compartment wall 70 is advantageously affixed to a floor of the passenger cabin 20, such as by suitable fasteners. The base compartment wall 70 extends horizontally and rearwardly from the forward compartment wall 64. In some aspects, the base compartment wall 70 has a length (in side view) L_{B} similar to the upper compartment wall 66, such that the rear opening 72 is defined between the upper compartment wall 66 and the base compartment wall 70. In some aspects, the base compartment wall 70 has a different length, for example being shorter than the upper compartment wall 66, so that the rear opening 72 is defined between the upper compartment wall 66 and a theoretical rearward projection of the base compartment wall 70. In some aspects, the forward compartment wall 64 and/or the upper compartment wall 66 and/or the base compartment wall 70 include one or more suitable notches or recessed areas for accommodating the support structure 36 for the first row of seats 32. In some aspects, these notch(es) or recessed area(s) wholly or partially subdivide the compartment 62 in two or more sub-compartment areas (not shown).

In some aspects, the upper section 52 is fitted with amenities 80 that face and serve the second row of seats 42. The amenities 80, in some aspects, include one or more of: one or more tray tables 82, and/or one or more video monitors 84, and/or one or more storage pockets 86. In some aspects, the upper section 52 is fitted with a number of like amenities 80 equal in number to the number of seats in the second row of seats 42. In some aspects, the number of like amenities 80 are more or less than the number of seats in the second row of seats 42. In some aspects, the bulkhead partition 50 supports a curtain or other movable divider that is selectively positionable to visually close of an aisle in the passenger cabin 20.

In some aspects, the upper section 52 of the bulkhead partition 50 is affixed to the ceiling 22 of the passenger cabin 20. For example, the upper section 52 may include attachment flanges 54 for accepting fasteners to affix the upper section 52 to the ceiling 22. In some aspects, the bulkhead partition 50 is affixed to both the ceiling 22 and the floor 24 of the passenger cabin 20, and extends therebetween.

The bulkhead partition 50 provides a compartment 62, which is intended to be used for storage of baggage and other personal items, typically belonging to one or more passengers sitting in the second row of seats 42. In addition, the compartment 62 may be used for positioning such passenger's feet. One or both of these functionalities are achieved by the bulkhead partition 50. In some aspects, the bulkhead partition 50 forms no portion of the support structure 36 for the first row of seats 32, and maintains a boundary between the forward and rearward sections 30,40 of the passenger cabin 20. Further, in some aspects, no portion of the bulkhead partition 50 extends farther forward than forwardmost portion of the first row of seats 32, so that the bulkhead partition 50 does not extend into the space intended for use by the passengers of the forward section 30.

The bulkhead partition 50 facilitates a method 200 of providing additional storage in the passenger cabin 20, according to an example method not forming part of the claimed invention, but which may be useful for understanding features thereof.

Such a method 200 includes providing (step 210) the bulkhead partition 50 with the compartment 62 in the lower section 60, as described above. The method 200 also includes securing (step 220) the bulkhead partition 50 between the first row of seats 32 and the second row of seats 42 such that: 1) the upper section 52 extends upwardly between the first row of seats 32 and the second row of seats 42; 2) the lower section 60 extends forwardly from the upper section 52 and underneath the first row of seats 32; and 3) the rear opening 72 provides access to the compartment 62 from the second row of seats 42. In some aspects, the securing the bulkhead partition 50 includes affixing the bulkhead partition 50 to the floor 24 of the passenger cabin 20 and/or the ceiling 22 of the passenger cabin 20.

Note that the bulkhead partition 50, and/or the associated passenger seating arrangement 26, and/or method 200, can be used during original manufacture of an aircraft 10, or during repair and/or maintenance of the aircraft 10. For example, an existing aircraft, having a conventional bulkhead partition, may be serviced by following a method 200 that includes detaching (step 190) the existing conventional bulkhead partition from the aircraft 10, and providing (step 210) the bulkhead partition 50 with the compartment 62 in the lower section 60, as described above, and then securing (step 220) the bulkhead partition 50 between the first row of seats 32 and the second row of seats 42, as described above and optionally in the same location as the detached (old) bulkhead partition. Note that the providing (step 210), in some aspects, occurs prior to the detaching (step 190); in other aspects, the providing (step 210) occurs after or concurrent with the detaching (step 190). Such a servicing would achieve providing additional storage in the passenger cabin 20, by providing the bulkhead partition 50 described herein as an upgrade and/or replacement.

The bulkhead partition 50 may be formed of any suitable material, such as metals, polymer materials, composite materials, or combinations thereof. Additionally, passenger facing surfaces of the bulkhead partition may fully or partially covered with suitable paint, graphics, and/or fabric for a desired aesthetic appearance.

## Claims

1. A bulkhead partition (50) for a passenger cabin (20) of an aircraft (10), the passenger cabin (20) having a first row of seats (32) and a second row of seats (42) disposed behind the first row of seats (32), the bulkhead partition (50) comprising:
an upper section (52) that extends upwardly, wherein the upper section (52) is straight in side view;
a lower section (60) disposed below the upper section (52), the lower section (60) extending forwardly from the upper section (52), and comprising:
a compartment (62) that extends forwardly;
a forward compartment wall (64) disposed forward of the compartment (62) and forwardly bounding the compartment (62);
a first compartment lateral wall (68) disposed on a first lateral side of the compartment (62) and bounding the first lateral side of the compartment (62), wherein the first lateral side of the compartment (62) is for being disposed toward an inboard side of the passenger cabin (20);
an upper compartment wall (66) disposed above the compartment (62) and upwardly bounding the compartment (62);
wherein the upper compartment wall (66) extends from, and connects, the upper section (52) to the forward compartment wall (64);
wherein the compartment (62) is rearwardly open at a rear opening (72); and wherein the lower section (60) is configured to extend beneath the first row of seats (32) when the bulkhead partition (50) is disposed between first row of seats (32) and the second row of seats (42),
wherein the compartment (62) is free of a second compartment lateral wall (68b) disposed on a second lateral side of the compartment (62) and bounding the second lateral side of the compartment (62), wherein the second lateral side is opposite to the first lateral side and for being toward an outboard side of the passenger cabin (20).

2. The bulkhead partition (50) of claim 1, wherein the upper compartment wall (66) has a width Wu and the forward compartment wall (64) has a width W_{F} that are wider as a first front seat (33) and as wide as a combined width of the second row of seats (42).

3. The bulkhead partition (50) of any of claims 1 to 2, wherein the first compartment lateral wall (68) is solid.

4. The bulkhead partition (50) of claim 3, wherein the first compartment lateral wall (68) is webbing.

5. The bulkhead partition (50) of any of claims 1 to 4, wherein the upper section (52) has upper and outboard lateral edges that are curved so as to match and/or accommodate a curved-cross-sectional shape of the passenger cabin (20).

6. The bulkhead partition (50) of any of claims 1 to 5, wherein the upper section (52) is configured to be affixed to a ceiling (22) of the passenger cabin (20).

7. The bulkhead partition (50) of any of claims 1 to 6:
wherein the lower section (60) further comprises a base compartment wall (70) configured to be affixed to a floor (24) of the passenger cabin (20);
wherein the base compartment wall (70) extends horizontally and rearwardly from the forward compartment wall (64); and
wherein the base compartment wall (70) is disposed below the compartment (62).

8. A passenger seating arrangement (26) for a passenger cabin (20) of an aircraft (10), the passenger seating arrangement (26) comprising:
the first row of seats (32) in a forward section (30) of the passenger cabin (20);
the second row of seats (42) disposed behind the first row of seats (32) in a rearward section (40) of the passenger cabin (20);
the bulkhead partition (50) of claim 1, wherein the bulkhead partition (50) is disposed between the first row of seats (32) and the second row of seats (42);
wherein
the upper section (52) extends upwardly between the first row of seats (32) and the second row of seats (42);
the lower section (60) extends underneath the first row of seats (32); the lower section (60) forms the compartment (62) underneath the first row of seats (32); and
the rear opening (72) provides access to the compartment (62) from the second row of seats (42).

9. The passenger seating arrangement (26) of claim 8, wherein the upper section (52) is affixed to a ceiling (22) of the passenger cabin (20).

10. The passenger seating arrangement (26) of any of claims 8 - 9:
wherein the forward compartment wall (64) is solid; and
wherein the first compartment lateral wall (68) is webbing.

11. The passenger seating arrangement (26) of any of claims 8 - 10:
wherein the first row of seats (32) comprises a plurality of seats, including a first front seat (33); and
wherein both the upper compartment wall (66) and the forward compartment wall (64) are wider than the first front seat (33).

12. The passenger seating arrangement (26) of any of claims 8-11:
wherein the lower section (60) further comprises a base compartment wall (70) affixed to a floor (24) of the passenger cabin (20);
wherein the base compartment wall (70) extends horizontally and rearwardly from the forward compartment wall (64); and
wherein the base compartment wall (70) is disposed below the compartment (62).

13. The passenger seating arrangement (26) of any of claims 8 - 12, wherein the upper section (52) is fitted with amenities (80) that face and serve the second row of seats (42).

14. The passenger seating arrangement (26) of claim 13:
wherein the upper section (52) is fitted with a number of like amenities (80) equal in number to a number of seats in the second row of seats (42); and
wherein the amenities (80) include one or more of: tray tables (82), video monitors (84), and storage pockets (86).

15. An aircraft (10) comprising the passenger seating arrangement (26) of any of claims 8 - 14.

## Patentansprüche

1. Trennwandpartition (50) für eine Passagierkabine (20) eines Luftfahrzeugs (10), wobei die Passagierkabine (20) eine erste Reihe aus Sitzen (32) und eine zweite Reihe aus Sitzen (42), die hinter der ersten Reihe aus Sitzen (32) angeordnet ist, aufweist, wobei die Trennwandpartition (50) aufweist:
einen oberen Abschnitt (52), der sich nach oben erstreckt, wobei der obere Abschnitt (52) in einer Seitenansicht gerade ist;
ein unterer Abschnitt (60), der unterhalb des oberen Abschnitts (52) angeordnet ist, wobei sich der untere Abschnitt (60) von dem oberen Abschnitt (52) nach vorne erstreckt und aufweist:
ein Fach (62), das sich nach vorne erstreckt;
eine vordere Fachwand (64), die vor dem Fach (62) angeordnet ist und die das Fach (62) nach vorne begrenzt;
eine erste seitliche Fachwand (68), die auf einer ersten seitlichen Seite des Fachs (62) angeordnet ist und die die erste seitliche Seite des Fachs (62) begrenzt, wobei die erste seitliche Seite des Fachs (62) zum Anordnen in Richtung einer Innenbordseite der Passagierkabine (20) dient;
eine obere Fachwand (66), die oberhalb des Fachs (62) angeordnet ist und die das Fach (62) nach oben begrenzt; wobei sich die obere Fachwand (66) von dem oberen Abschnitt (52) zur vorderen Fachwand (64) erstreckt und mit ihr verbunden ist;
wobei das Fach (62) nach hinten bei einer hinteren Öffnung (72) offen ist; und wobei der untere Abschnitt (60) eingerichtet ist, sich unter der ersten Reihe aus Sitzen (32) zu erstrecken, wenn die Trennwandpartition (50) zwischen einer ersten Reihe aus Sitzen (32) und der zweiten Reihe aus Sitzen (42) angeordnet ist,
wobei das Fach (62) frei von einer zweiten seitlichen Fachwand (68b) ist, die auf einer zweiten seitlichen Seite des Fachs (62) angeordnet ist und die die zweite seitliche Seite des Fachs (62) begrenzt, wobei die zweite seitliche Seite der ersten seitlichen Seite gegenüberliegt und zur Anordnung in Richtung einer Außenbordseite der Passagierkabine (20) dient.

2. Trennwandpartition (50) nach Anspruch 1, wobei die obere Fachwand (66) eine Breite W_{U} aufweist und wobei die vordere Fachwand (64) eine Breite W_{F} aufweist, die breiter als ein erster Vordersitz (33) und genauso breit wie eine kombinierte Breite der zweiten Reihe aus Sitzen (42) sind.

3. Trennwandpartition (50) nach einem der Ansprüche 1 bis 2, wobei die erste seitliche Fachwand (68) massiv ist.

4. Trennwandpartition (50) nach Anspruch 3, wobei die erste seitliche Fachwand (68) ein Gurtband ist.

5. Trennwandpartition (50) nach einem der Ansprüche 1 bis 4, wobei der obere Abschnitt (52) eine obere Kante und eine seitliche Außenbordkante aufweist, die so gekrümmt sind, dass sie zu einer gekrümmten Querschnittsform der Passagierkabine (20) passen und/oder sie aufnehmen.

6. Trennwandpartition (50) nach einem der Ansprüche 1 bis 5, wobei der obere Abschnitt (52) eingerichtet ist, an einer Decke (22) der Passagierkabine (20) befestigt zu werden.

7. Trennwandpartition (50) nach einem der Ansprüche 1 bis 6:
wobei der untere Abschnitt (60) ferner eine Grundfachwand (70) aufweist, die eingerichtet ist, an einem Boden (24) der Passagierkabine (20) befestigt zu werden;
wobei sich die Grundfachwand (70) horizontal und nach hinten von der vorderen Fachwand (64) erstreckt; und
wobei die Grundfachwand (70) unterhalb des Fachs (62) angeordnet ist.

8. Passagiersitzanordnung (26) für eine Passagierkabine (20) eines Luftfahrzeugs (10), wobei die Passagiersitzanordnung (26) aufweist:
die erste Reihe aus Sitzen (32) in einem vorderen Abschnitt (30) der Passagierkabine (20);
die zweite Reihe aus Sitzen (42), die hinter der ersten Reihe aus Sitzen (32) in einem hinteren Abschnitt (40) der Passagierkabine (20) angeordnet ist;
die Trennwandpartition (50) nach Anspruch 1, wobei die Trennwandpartition (50) zwischen der ersten Reihe aus Sitzen (32) und der zweiten Reihe aus Sitzen (42) angeordnet ist;
wobei
sich der obere Abschnitt (52) nach oben zwischen die erste Reihe aus Sitzen (32) und die zweite Reihe aus Sitzen (42) erstreckt;
sich der untere Abschnitt (60) unterhalb der ersten Reihe aus Sitzen (32) erstreckt; wobei der untere Abschnitt (60) das Fach (62) unterhalb der ersten Reihe aus Sitzen (32) bildet; und
die hintere Öffnung (72) Zugriff auf das Fach (62) von der zweiten Reihe aus Sitzen (42) gewährt.

9. Passagiersitzanordnung (26) nach Anspruch 8, wobei der obere Abschnitt (52) an einer Decke (22) der Passagierkabine (20) befestigt ist.

10. Passagiersitzanordnung (26) nach einem der Ansprüche 8-9:
wobei die vordere Fachwand (64) massiv ist; und
wobei die erste seitliche Fachwand (68) ein Gurtband ist.

11. Passagiersitzanordnung (26) nach einem der Ansprüche 8-10:
wobei die erste Reihe aus Sitzen (32) eine Vielzahl von Sitzen einschließlich eines ersten Vordersitzes (33) aufweist; und
wobei sowohl die obere Fachwand (66) als auch die vordere Fachwand (64) breiter als der erste Vordersitz (33) sind.

12. Passagiersitzanordnung (26) nach einem der Ansprüche 8-11:
wobei der untere Abschnitt (60) ferner eine Grundfachwand (70) aufweist, die an einem Boden (24) der Passagierkabine (20) befestigt ist;
wobei sich die Grundfachwand (70) horizontal und nach hinten von der vorderen Fachwand (64) erstreckt; und
wobei die Grundfachwand (70) unter dem Fach (62) angeordnet ist.

13. Passagiersitzanordnung (26) nach einem der Ansprüche 8-12, wobei der obere Abschnitt (52) mit Einrichtungen (80) ausgestattet ist, die der zweiten Reihe aus Sitzen (42) zugewandt sind und ihr dienen.

14. Passagiersitzanordnung (26) nach Anspruch 13:
wobei der obere Abschnitt (52) mit einer Anzahl ähnlicher Einrichtungen (80) ausgestattet ist, die hinsichtlich einer Anzahl einer Anzahl von Sitzen in der zweiten Reihe aus Sitzen (42) gleicht; und
wobei die Einrichtungen (80) eines oder mehrere umfassen aus: Tablartischen (82), Videomonitoren (84) und Stautaschen (86).

15. Luftfahrzeug (10), das die Passagiersitzanordnung (26) nach einem der Ansprüche 8-14 aufweist.

## Revendications

1. Cloison (50) pour une cabine passagers (20) d'un aéronef (10), la cabine passagers (20) comportant une première rangée de sièges (32) et une seconde rangée de sièges (42) disposée derrière la première rangée de sièges (32), la cloison (50) comprenant :
une section supérieure (52) qui s'étend vers le haut, la section supérieure (52) étant droite dans une vue de côté ;
une section inférieure (60) disposée sous la section supérieure (52), la section inférieure (60) s'étendant vers l'avant à partir de la section supérieure (52), et comprenant :
un compartiment (62) qui s'étend vers l'avant ;
une paroi avant de compartiment (64) disposée à l'avant du compartiment (62) et délimitant le compartiment (62) vers l'avant ;
une première paroi latérale de compartiment (68) disposée sur un premier côté latéral du compartiment (62) et délimitant le premier côté latéral du compartiment (62), le premier côté latéral du compartiment (62) étant destiné à être disposé vers un côté intérieur de la cabine passagers (20) ;
une paroi supérieure de compartiment (66) disposée au-dessus du compartiment (62) et délimitant le compartiment (62) vers le haut ; la paroi supérieure de compartiment (66) s'étendant de la section supérieure (52) à la paroi avant de compartiment (64) et les raccordant ;
le compartiment (62) étant ouvert vers l'arrière au niveau d'une ouverture arrière (72) ; et la section inférieure (60) étant conçue pour s'étendre sous la première rangée de sièges (32) lorsque la cloison (50) est disposée entre la première rangée de sièges (32) et la seconde rangée de sièges (42),
le compartiment (62) étant dépourvu d'une seconde paroi latérale de compartiment (68b) disposée sur un second côté latéral du compartiment (62) et délimitant le second côté latéral du compartiment (62), le second côté latéral étant situé à l'opposé du premier côté latéral et étant destiné à être orienté vers le côté extérieur de la cabine passagers (20).

2. Cloison (50) selon la revendication 1, dans laquelle la paroi supérieure de compartiment (66) présente une largeur W_{U} et la paroi avant de compartiment (64) présente une largeur W_{F} qui sont plus larges qu'un premier siège avant (33) et aussi larges qu'une largeur combinée de la seconde rangée de sièges (42).

3. Cloison (50) selon l'une quelconque des revendications 1 et 2, dans laquelle la première paroi latérale de compartiment (68) est pleine.

4. Cloison (50) selon la revendication 3, dans laquelle la première paroi latérale de compartiment (68) est constituée de sangles.

5. Cloison (50) selon l'une quelconque des revendications 1 à 4, dans laquelle la section supérieure (52) comporte des bords latéraux supérieur et extérieur qui sont incurvés de façon à correspondre et/ou s'adapter à une forme en section transversale incurvée de la cabine passagers (20).

6. Cloison (50) selon l'une quelconque des revendications 1 à 5, dans laquelle la section supérieure (52) est conçue pour être fixée à un plafond (22) de la cabine passagers (20).

7. Cloison (50) selon l'une quelconque des revendications 1 à 6 :
dans laquelle la section inférieure (60) comprend, en outre, une paroi de base de compartiment (70) conçue pour être fixée à un plancher (24) de la cabine passagers (20) ;
dans laquelle la paroi de base de compartiment (70) s'étend horizontalement et vers l'arrière à partir de la paroi avant de compartiment (64) ; et
dans laquelle la paroi de base de compartiment (70) est disposée sous le compartiment (62).

8. Agencement de sièges passagers (26) pour une cabine passagers (20) d'un aéronef (10), l'agencement de sièges passagers (26) comprenant :
la première rangée de sièges (32) dans une section avant (30) de la cabine passagers (20) ;
la seconde rangée de sièges (42) disposée derrière la première rangée de sièges (32) dans une section arrière (40) de la cabine passagers (20) ;
la cloison (50) selon la revendication 1, la cloison (50) étant disposée entre la première rangée de sièges (32) et la seconde rangée de sièges (42) ;
dans lequel
la section supérieure (52) s'étend vers le haut entre la première rangée de sièges (32) et la seconde rangée de sièges (42) ;
la section inférieure (60) s'étend sous la première rangée de sièges (32) ; la section inférieure (60) forme le compartiment (62) sous la première rangée de sièges (32) ; et
l'ouverture arrière (72) permet d'accéder au compartiment (62) depuis la seconde rangée de sièges (42).

9. Agencement de sièges passagers (26) selon la revendication 8, dans lequel la section supérieure (52) est fixée à un plafond (22) de la cabine passagers (20).

10. Agencement de sièges passagers (26) selon l'une quelconque des revendications 8 et 9:
dans lequel la paroi avant de compartiment (64) est pleine ; et
dans lequel la première paroi latérale de compartiment (68) est constituée de sangles.

11. Agencement de sièges passagers (26) selon l'une quelconque des revendications 8 à 10 :
dans lequel la première rangée de sièges (32) comprend une pluralité de sièges, comprenant un premier siège avant (33) ; et
dans lequel la paroi supérieure de compartiment (66) et la paroi avant de compartiment (64) sont toutes deux plus larges que le premier siège avant (33).

12. Agencement de sièges passagers (26) selon l'une quelconque des revendications 8 à 11 :
dans lequel la section inférieure (60) comprend, en outre, une paroi de base de compartiment (70) fixée à un plancher (24) de la cabine passagers (20) ;
dans laquelle la paroi de base de compartiment (70) s'étend horizontalement et vers l'arrière à partir de la paroi avant de compartiment (64) ; et
dans laquelle la paroi de base de compartiment (70) est disposée sous le compartiment (62).

13. Agencement de sièges passagers (26) selon l'une quelconque des revendications 8 à 12, dans lequel la section supérieure (52) est équipée d'éléments de confort (80) qui sont disposés face à et à l'usage de la seconde rangée de sièges (42).

14. Agencement de sièges passagers (26) selon la revendication 13 :
dans lequel la section supérieure (52) est équipée d'un nombre d'éléments de confort (80) identiques égal à un nombre de sièges dans la seconde rangée de sièges (42) ; et
dans lequel les éléments de confort (80) comprennent : des tablettes (82) et/ou des écrans vidéo (84) et/ou des poches de rangement (86).

15. Aéronef (10) comprenant l'agencement de sièges passagers (26) selon l'une quelconque des revendications 8 à 14.
